# EUROPÄISCHE PATENTSCHRIFT

(11) **EP 1 205 383 B1**
(45) Veröffentlichungstag und Bekanntmachung des Hinweises auf die Patenterteilung: **05.01.2005**
(21) Anmeldenummer: 01126662.4
(22) Anmeldetag: 08.11.2001
(51) Int. Cl.: B64C 3/48

(54) **Mechanismus zur zumindest bereichsweisen Verstellung der Wölbung von Tragflügeln**
Mechanism for modifying the camber of at least a part of an aircraft wing
Mécanisme pour modifier la courbure d'au moins une partie d'une aile d'aéronef

(30) Priorität: 11.11.2000 DE 10055961
(43) Veröffentlichungstag der Anmeldung: 15.05.2002
(73) Patentinhaber: Airbus Deutschland GmbH, 21129 Hamburg (DE)
(72) Erfinder: Perez, Juan, 83620 Feldkirchen-Westerham (DE)
(74) Vertreter: Hansmann, Dierk, Dipl.-Ing.

(56) Entgegenhaltungen:
- DE-A- 19 707 392
- DE-C- 19 852 944
- FR-A- 495 650
- US-A- 3 109 613
- US-A- 4 247 066
- US-A- 4 252 287

## Beschreibung

Die Erfindung betrifft einen variablen Flügelbereichs mit einstellbarer, sich in Spannweiten-Richtung erstreckender Profilform.

Bei Luftfahrzeugen, insbesondere bei Flugzeugen sind Mechanismen zur zumindest bereichsweisen Verstellung der Wölbung von Tragflügeln oder Tragflügel-Bereichen wünschenswert. Konventionelle Steuerklappen können nur als starre Flügelteile verstellt werden, bei ihnen erfolgt die Umlenkung der Strömung am Flügel aerodynamisch nicht optimal. Außerdem ist die Lastverteilung ungünstig, da die Steuerklappe an einzelnen Anschlußstellen am Tragflügel angelenkt ist, so daß lokal verhältnismäßig große Spannungen auftreten.

Aus der US 4 247 066 ist ein variabler Flügelbereich mit einer einstellbaren, sich in Spannweiten-Richtung erstreckenden Profilform bekannt, der eine erste Beplankung und eine dieser gegenüberliegende zweite Beplankung aufweist. Zur Veränderung der Profilform sind in Form von biegbaren Strukturen ausgebildete Rippen vorgesehen, welche mehrere in Längsrichtung, d.h. in Anströmrichtung hintereinander angeordnete gelenkig miteinander verbundene wirbelartige Elemente umfassen.

Diese enthalten jeweils einen oberen und einen unteren Teil, die mittels einer Spindel gegeneinander verschieblich und mittels eines Gelenks gegeneinander verschwenkbar und jeweils mit der oberen bzw. der unteren Beplankung des Flügelbereichs verbunden sind. Durch Drehung der Spindel und Verschiebung der oberen und unteren Teile der wirbelförmigen Rippenelemente gegeneinander erfolgt eine Verschiebung der oberen und unteren Beplankung gegeneinander und damit eine Veränderung der Profilform des variablen Flügelbereichs. Die biegbaren Rippen tragen die beiden Beplankungen des variablen Flügelbereichs. Zum Ausgleichen von Längenänderungen sind die obere bzw. die untere Beplankung in kulissenartigen Führungen gegen die Rippenelemente verschiebbar angeordnet.

Aus der US 4 252 287 ist ein variabler Flügelbereich mit einer einstellbaren, sich in Spannweiten-Richtung erstreckenden Profilform bekannt, bei welchem eine erste Beplankung und eine dieser gegenüberliegende zweite Beplankung durch parallelogrammförmig angeordnete Hebel miteinander verbunden sind. Zur Veränderung der Profilform ist ein am Flügelkasten gelagerter Schwingarm vorgesehen, welcher über weitere Hebel mit einem an die untere Beplankung angeschlossenen Schlitten gekoppelt ist. Bei einem Schwenken des Schwingarms wird dessen Bewegung über den Schlitten und die parallelogrammförmigen Hebel in eine Änderung der Profilform des variablen Flügelbereichs umgesetzt. Die Längenänderung der oberen und unteren Beplankung wird durch eine Veränderung des Nasen-Radius des variablen Flügelbereichs aufgefangen.

Schließlich ist aus der DE 197 07 392 A1 ein variabler Flügelbereich mit einstellbarer Profilform bekannt, bei dem eine erste Beplankung und eine dieser gegenüberliegende zweite Beplankung durch einen biegsamen geschlossenen Außengürtel aufweisende Rippen und mehrere an ihren Enden an dem Außengürtel angreifende Versteifungsstreben abgestützt sind. Durch direkt oder indirekt an dem Außengürtel und/oder den Versteifungsstreben angreifende Betätigungseinrichtungen ist unter Veränderung der Neigungswinkel zwischen dem Außengürtel und den Versteifungsstreben eine Einstellung der Profilform möglich.

Die Aufgabe der Erfindung ist es, einen variablen Flügelbereich mit einstellbarer, sich in Spannweiten-Richtung erstreckender Profilform zu schaffen, bei dem eine zumindest bereichsweise Verstellung der Wölbung möglich ist und der einfach und verhältnismäßig leicht gebaut ist. Insbesondere soll der variable Flügelbereich zum Steuern, Manövrieren, Stabilisieren oder auch zum Trimmen einen Flugzeugs geeignet sein.

Diese Aufgabe wird durch einen variablen Flügelbereich mit den Merkmalen des Anspruchs 1 gelöst.

Weitere vorteilhafte Ausführungsformen sind in den Unteransprüchen angegeben.

Im folgenden werden Ausführungsbeispiele der Erfindung anhand der Figuren beschrieben. Es zeigt:
Figur 1 eine Draufsicht auf einen Flügel mit nach einer Ausführungsform der Erfindung abschnittsweise variabler Wölbung mit einem Flügelkasten, an dessen vorderem und hinterem Ende ein jeweils erfindungsgemäßer flexibler Vorderkanten- und Hinterkanten-Bereich gemäß einer Ausführungsform der Erfindung vorgesehen sind;
Figur 2 einen Schnitt in Strömungs- oder Flügeltiefen-Richtung durch den Flügel nach Figur 1;
Figur 3 einen Schnitt in Strömungs-Richtung durch den Hinterkanten-Bereich nach der Figur 1 mit Versteifungselementen und Wirbelelementen, deren Stellungen dem Hinterkanten-Bereich eine Gestalt gibt, bei der für den gesamten Flügel ein Hochauftrieb bewirkt wird;
Figur 4 einen Schnitt in Strömungs-Richtung durch einen Abschnitt des Hinterkanten-Bereichs bzw. einen Abschnitt des Vorderkanten-Bereichs mit einer ersten Ausführungsform eines Pendellagers zur Verbindung zwischen zwei Wirbelelementen und zwischen diesen und einem Holm eines Torsionskastens des Flügels;
Figur 5 eine Darstellung nach der Figur 4 mit einer zweiten Ausführungsform des Pendellagers;

- Figur 6 eine Darstellung nach der Figur 4 einer dritten Ausführungsform des Pendellagers,
- Figur 7 einen Schnitt durch den Abschnitt nach der Figur 4, wobei das Pendellager als elastisches Lager ausgeführt ist,
- Figur 8 einen Schnitt in Strömungs-Richtung durch den Hinterkanten-Bereich nach der Figur 1, wobei der Hinterkanten-Bereich eine Gestalt hat, bei der für den gesamten Flügel ein Hochauftrieb mit einer optimierten Lastverteilung bewirkt werden kann,
- Figur 9 einen Schnitt in Strömungs-Richtung durch den Hinterkanten-Bereich nach der Figur 1, wobei die Hinterkanten-Klappe eine Gestalt hat, bei der für den gesamten Flügel eine Roll-Last bewirkt werden kann,
- Figur 10 einen Schnitt in Strömungs-Richtung durch den Hinterkanten-Bereich nach der Figur 1, wobei der Hinterkanten-Bereich eine Gestalt hat, bei der für den gesamten Flügel eine von unten auf den Flügel, d.h. auf dessen konkave Seite wirkende Manöverlast bewirkt werden kann,
- Figur 11 eine perspektivische Darstellung eines Segments einer Ausführungsform des erfindungsgemäßen Hinterkanten-Bereichs variabler Wölbung mit einem Strang von Wirbelelementen und der zugeordneten Beplankung in Neutralstellung, wobei der Wirbelstrang innerhalb des Flügels angeordnet ist,
- Figur 12 eine in der Blickrichtung von unten gesehene, perspektivische Darstellung eines Segments des Hinterkanten-Bereichs als eine Ausführungsform des erfindungsgemäßen Tragflügels variabler Wölbung mit einem Strang von Wirbelelementen und der zugeordneten Beplankung in einer gewölbten Stellung, wobei der Wirbelstrang unterhalb des Flügels in einer Gondelanordnung angeordnet ist,
- Figur 13 einen Schnitt durch einen in Flugrichtung gesehen hinteren Abschnitt des Hinterkanten-Bereichs mit einer ersten Ausführungsform einer Führungs-Einrichtung zum Halten der Beplankungen an einem Endstück des Profils,
- Figur 14 eine perspektivische Ansicht eines Teils des in der Figur 13 dargestellten Abschnitts,
- Figur 15 eine Seitenansicht einer alternativen Ausführung der Führungseinrichtung nach der Figur 13,
- Figur 16 ein Abstandhalter, der die Funktion eines Längenausgleichs-Elements in einem Endbereich des variablen Flügels hat,
- Figur 17 eine alternative Ausführungsform des Abstandhalters,
- Figur 18 eine perspektivische Darstellung eines sich quer zur Vorderkanten-Linie erstreckenden Segments des Vorderkanten-Bereichs variabler Wölbung mit einem Strang von Wirbelelementen und der zugeordneten Beplankung in einer gewölbten Stellung, wobei der Wirbelstrang innerhalb des Flügels angeordnet ist,
- Figur 19 einen Schnitt quer zur Vorderkanten-Linie durch den Vorderkanten-Bereich nach der Figur 18, wobei sich der Vorderkanten-Bereich in Neutralstellung befindet, und
- Figur 20 einen Schnitt quer zur Vorderkanten-Linie durch den Vorderkanten-Bereich nach der Figur 18, wobei die Gestalt des Vorderkanten-Bereichs eine Hochauftriebs-Konfiguration bewirkt.

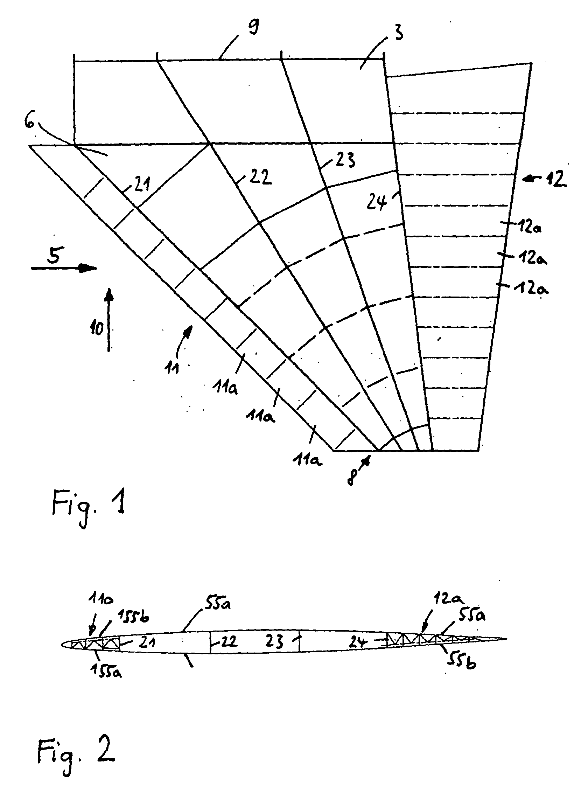

In der Figur 1 ist eine bevorzugte Ausführungsform eines Tragflügels oder Flügels 1 eines Flugzeugs mit einem Flügelkasten 3 dargestellt, für deren Vorderkanten- oder auch Hinterkanten-Klappe die Erfindung anwendbar ist. Der mit den Bezugszeichen 5 versehene Pfeil zeigt die Flügeltiefen-Richtung oder ungefähre Strömungsrichtung in Bezug auf den Flügel 1. Der dargestellte Flügelkasten 3 umfaßt eine Flügelspitze 8 und vorzugsweise einen Wurzelbereich 9 und einen weitgehend formsteifen Flügelkasten 6, wobei der Flügelkasten 6 über den Wurzelbereich 9 am Rumpf des Flugzeugs befestigt ist. Der Flügel 1 weist einen einteiligen oder in dessen Spannweiten-Richtung 10 gesehen in mehrere Segmente 11a aufgeteilten Vorderkanten-Bereich 11 und einen einteiligen oder in deren Spannweiten-Richtung 10 gesehen in mehrere Segmente 12a aufgeteilten Hinterkanten-Bereich 12 auf, auf deren Profilwölbungs-Verstellung sich die Erfindung vorzugsweise bezieht. Die Erfindung kann jedoch auch zur Wölbungs-Verstellung alternativ oder zusätzlich zu den Vorder- oder Hinterkanten-Bereichen auf den Flügelkasten 3 oder den gesamten Flügel 1 angewendet werden. Auch kann die erfindungsgemäße Wölbungsverstellung auch entweder nur auf den Vorderkanten- oder nur auf den Hinterkanten-Bereich angewendet werden. Die Reihe von erfindungsgemäßen variablen Vorderkanten-Segmenten 11a bzw. Hinterkanten-Segmenten 12a muß sich auch nicht über die gesamte Flügel-Spannweite 10 erstrecken, sondern kann auch nur eine sich in dieser Richtung erstreckenden Zone des Tragflügels oder einer Flügel-Vorderkante 11 bzw. einer Flügel-Hinterkante 12 bilden.

Der Flügelkasten 6 kann mehrere Hauptholme aufweisen, z.B. einen ersten 21, einen zweiten 22, einen dritten 23 und einen vierten 24 Hauptholm, die - beim in der Figur 1 dargestellten Beispiel - entsprechend der sich zur Flügelspitze 8 verringernden Flügeltiefe 5 zur Flügelspitze 13 hin ein Stück weit aufeinander zulaufen. Die Zahl der Hauptholme hängt dabei vom Anwendungsfall und der Bauart der Flügels 1 ab.

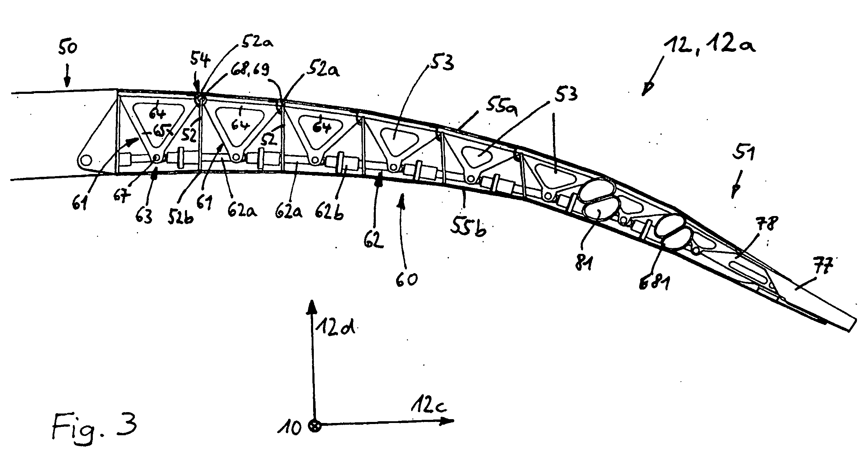

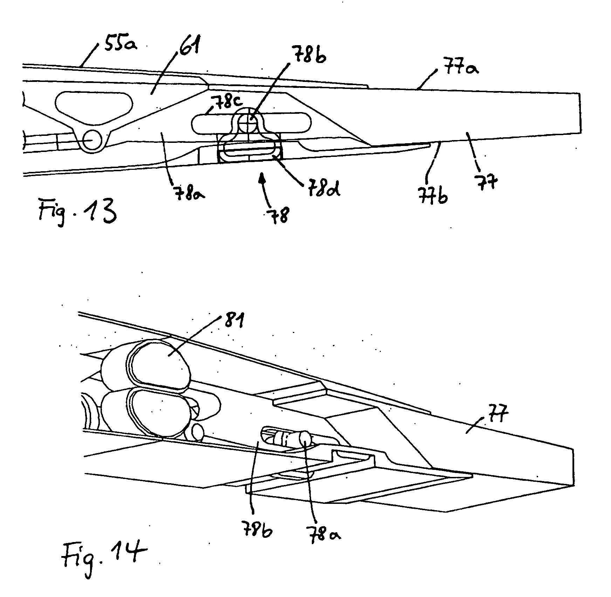

Im folgenden wird die Anwendung von Ausführungsformen des erfindungsgemäßen variablen Flügelbereichs für einen Hinterkanten-Bereichs 12 an Hand der Figuren 3 bis 17 beschrieben:

Der dort als Beispiel eines erfindungsgemäßen variablen Flügelbereichs dargestellte Hinterkanten-Bereich 12 ist aus mehreren in Spannweiten-Richtung 10 nebeneinander angeordneten Hinterkanten-Segmenten 12a aufgebaut, die jeweils aus mehreren in der Flügelbereichs- oder Klappenbereichs-Längsrichtung 12c gesehen hintereinander angeordneten Torsionskästen 53 gebildet werden. Das Segment 12a wird quer zu seiner Klappen-Längsrichtung 12c, also in der vertikalen Richtung 12d, umgrenzt von einer oberen Beplankung 55a und einer dieser gegenüberliegenden unteren Beplankung 55b jeweils aus Material vernachlässigbarer Dehnung. Die obere Beplankung 55a ist in den Figuren 3 bis 18 dargestellten Beispielen die saugseitige, und die untere Beplankung 55b die druckseitige Beplankung des betrachteten Flügels. Die Beplankungen werden gestützt durch vorzugsweise mehrere in der Längsrichtung 12c angeordnete Holme 52 und bestimmen die Profilform oder Profilkontur des variaben Flügelbereichs, wobei die Beplankungen jeweils durchgehend oder aus Abschnitten, die größenmäßig den Segmenten 12a entsprechen, gebildet sein kann. Die Biegesteifigkeit der Beplankungen um die Spannweiten-Achse 10 ist so zu wählen, daß die durch die Luftlasten entstehenden Verformungen für die geforderten Eigenschaften des Profils tolerabel sind. Hinsichtlich der erfindungsgemäß einstellbaren Verformungen ist eine entsprechende Torsionssteifigkeit um die Spannweiten-Achse 10 sicherzustellen. Das Segment 12a ist durch zumindest einen Holm 52 in Räume oder Flügel-Torsionskästen 53 unterteilt, der die erste 55a und die zweite 55b Beplankung voneinander beabstandet und mit diesen über erste 52a bzw. zweite 52b Stütz- oder Anschlußstellen in Verbindung steht, die durch beispielsweise durch Scharnier- oder elastische Gelenke realisiert sein können. In entsprechender Weise wird die erste Beplankung 55a und die zweite Beplankung 55b je Segment 12a und zwischen zwei benachbarten Holmen 52 aus Beplankungs-Abschnitten 56a bzw. 56b gebildet, die Teile einer einheitlichen Beplankung oder auch physisch einzelne, die jeweilige Beplankung zusammensetzende Abschnitte sein können. Der Torsionskasten 53 neben dem ersten 50 oder zweiten 51 Endbereich kann alternativ nur einen Holm 52 aufweisen, wenn der jeweilige Endbereich 50, 51 selbst eine Seite des Torsionskastens 53 abstützt. Die Holme weisen eine ausreichende Torsionssteifigkeit in Spannweiten-Richtung 10 auf. Auch ihre Verbindung mit der jeweiligen Beplankung bzw. mit dem Gelenk 69 weist eine ausreichende Steifigkeit auf, um die geforderte Torsionssteifigkeit der Torsionkästen 53 um die Spannweiten-Achse 10 sicherzustellen.

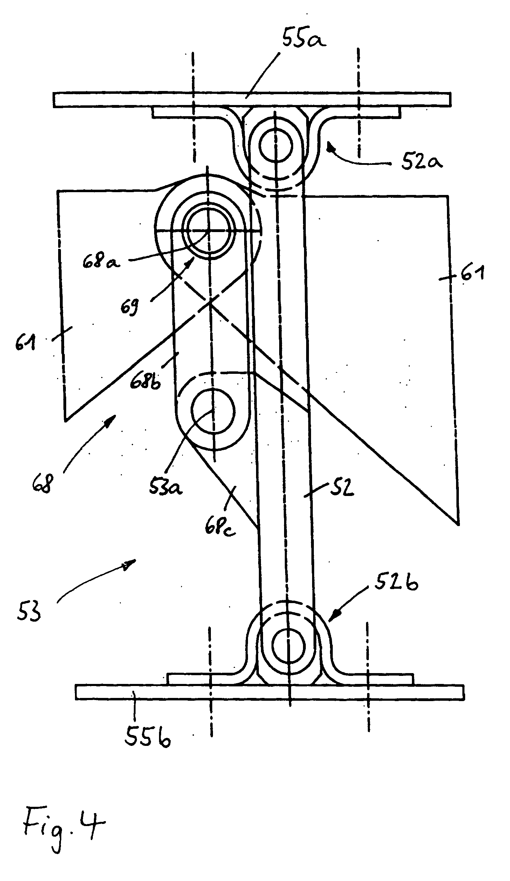

In der Klappen-Längsrichtung 12c erstreckt sich jedes Hinterkanten-Segment 12a von einem ersten Endbereich 50 bis zu einem zweiten Endbereich 51. Zwischen diesen Endbereichen 50, 51 erstreckt sich auch eine in Klappen-Längsrichtung 12c verlaufende Antriebsmechanik 60 mit zumindest einer wirbelsäulenartigen Rippe oder einem Antriebswirbel oder Wirbel 61 und einem Antriebsstrang 62 aus zumindest einer variablen Antriebsehne 62a zum Verschwenken des zumindest einen Wirbels 61. Bei der Verwendung mehrerer Wirbel 61 sind diese zusätzlich über jeweils ein Wirbel-Gelenk 69 miteinander verbunden (Figur 4, 5,6). Die Wirbel 61 können jeweils zwischen zwei Holmen 52, wie es in der Figur 3 dargestellt ist, oder auch in der Längsrichtung 12c versetzt zu diesen angeordnet sein. In letzterem Fall können in den Holmen 52 entsprechende Ausnehmungen (nicht dargestellt) vorgesehen sein, durch die sich die Wirbel 61 hindurcherstrecken. Jeder Antriebswirbel oder Wirbel 61 weist eine in seiner Länge veränderliche Profilsehne 62a zur Bewegung des Wirbels 61 über eine Verbindungsstelle 63 und ein Übertragungselement 64 zur Übertragung der Wirbelbewegung auf die Torsionskästen 53 auf, das von der Antriebsehne 62a in der vertikalen Richtung 12d beabstandet ist. Vorzugsweise sind mehrere Antriebsehnen 62a und Wirbel 61 in der Längsrichtung 12c in einer Reihe angeordnet. Die Erfindung kann jedoch auch mit nur einem Wirbel 61 und nur einer Antriebsehne 62a realisiert werden.

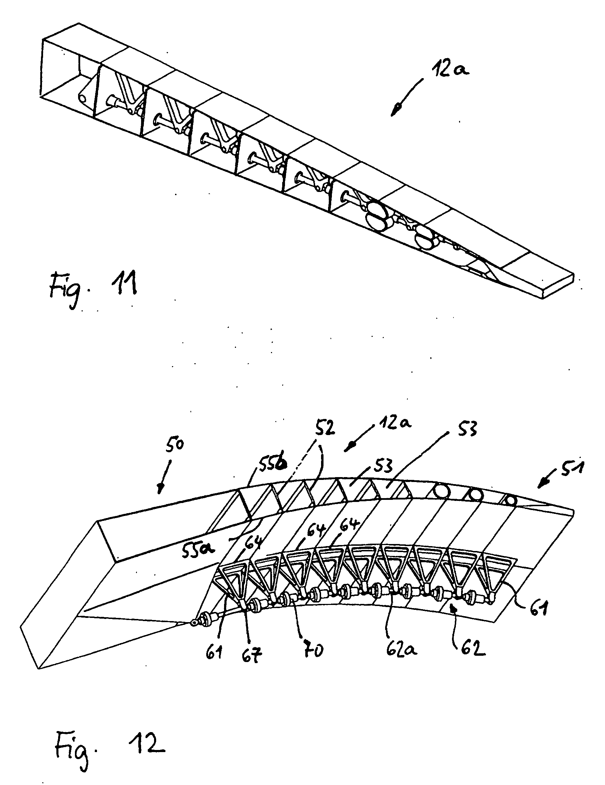

Zur Übertragung der Wirbelbewegung auf die Torsionskästen 53 ist jedes Übertragungselement 64 an einem Gelenk-Punkt 64a, 64b über ein Pendel-Gelenk 68 mit einer Verbindungsstelle oder einem Gelenk-Punkt 53a an einem Bestandteil des Torsionskastens 53 verbunden. Das Pendel-Gelenk 68 gewährleistet eine Pendelbewegung bei der Profil-Verstellung zwischen dem Pendel-Gelenk 68, d.h. dem jeweiligen Ende des Übertragungselements 64, und der jeweiligen Verbindungsstelle 53a an der ersten Beplankung 55a, um bei jeder Verstellung den Längenverzug zwischen der Beplankung und dem zumindest einen Übertragungselement 64 auszugleichen. In einem speziellen Fall können die Gelenk-Punkte 64a, 64b an den Eckpunkten des Übertragungs-Elements 64 vorgesehen sein (Figuren 3, 4, 6). Der Gelenk-Punkt 53a für die Torsionskasten-seitige Anordnung des Pendel-Gelenks 69 kann an der jeweils benachbarten Beplankung 55a, 55b, im folgenden erste Beplankung 55a genannt, vorgesehen sein (Figuren 3, 5, 6). Bei der Ausführungsform der Figuren 3 bis 11 ist die erste Beplankung die obere, d.h. saugseitige Beplankung 55a. Bei dem Ausführungsbeispiel der Figur 12 ist die erste Beplankung die untere Beplankung 55b. Der Gelenk-Punkt 53a kann auch am Holm 52 gelegen sein (Figur 4).

Unter Einwirkung der Antriebsmechanik 60, d.h. die Längenänderung der Antriebsehnen 62a, im Zusammenspiel mit den Antriebswirbeln 61 verändert sich die geometrische Form der Torsionkästen 53, so daß auch die Lagen der ersten 55a und der zweiten 55b Beplankung absolut und relativ zueinander verändert wird. Auf diese Weise wird auch die Form des variablen Flügelbereichs verändert.

Verschiedene Ausführungsformen des Pendel-Gelenks 68 zwischen Wirbeln 61 und Torsionskasten 53 sind in den Figuren 4 bis 7 dargestellt. Bei der Ausführungsform nach der Figur 4 ist das Wirbel-Gelenk 69 ein erster Gelenk-Punkt 68a für ein Pendel 68b des Pendel-Gelenks 68. Der zweite Gelenk-Punkt des Pendels 68 ist der Gelenk-Punkt 53a, der die Torsionskasten-seitige Lagerung darstellt. Dieser ist an einer Halterung 68c am Holm 52 vorgesehen. Eine Relativ-Bewegung der Wirbel 61 gegenüber dem Torsionskasten 53 ist durch die Schwenk-Bewegung des Pendels 68b als Teil des Pendel-Gelenks 68 kinematisch möglich.

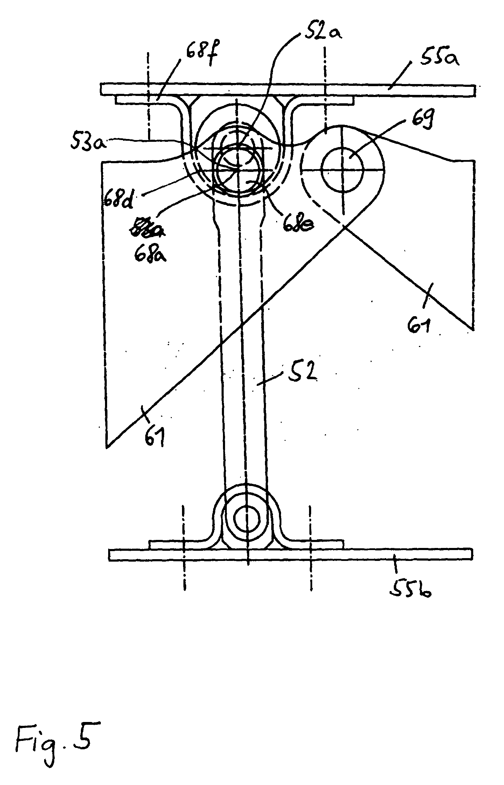

Das Pendel-Gelenk 68 hat in der Ausführungsform nach der Figur 5 die Form eines Exzenter-Gelenks. Der erste Gelenkpunkt 68a des Pendel-Gelenks 68 am Wirbel 61 ist versetzt zum Wirbel-Gelenk 69 angeordnet. Dieser kann jedoch auch mit dem Wirbel-Gelenk 69 zusammenfallen. Der zweite Gelenk-Punkt 53a für die Torsionskasten-seitige Anordnung des Pendel-Gelenks 69 ist an der ersten Beplankung 55a vorgesehen und ist eine Exzenter-Buchse 68d, die an einer entsprechenden Halterung oder Befestigungsmanschette oder Stringer 68f an der ersten Beplankung 55a befestigt ist. Ein exzentrisch in der Exzenter-Buchse 68d gelegener Gelenk-Bolzen 68e verbindet die beiden Gelenk-Punkte 68a, 53a. Die Stützstelle 52a des Holms 52 an der ersten Beplankung 55a ist in Spannweiten-Richtung 10 gesehen versetzt zum Torsionskastenseitigen Gelenk-Punkt 53a gelegen. Relativ-Bewegungen zwischen Wirbeln 61 und Torsionskasten 52 wird durch die exzentrische Lage des Gelenk-Bolzens 68e in der Exzenter-Buchse ermöglicht.

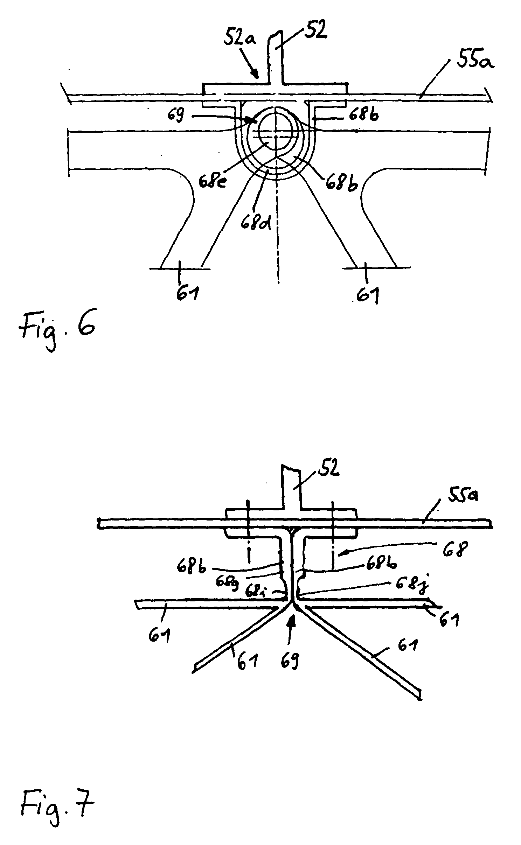

In der Ausführungsform nach der Figur 6 umfaßt das Pendel-Gelenk 68 ebenfalls eine Exzenter-Buchse 68d, die in einer Halterung oder Befestigungsmanschette 68f gelegen ist, und einen Gelenk-Bolzen 68e. Der Gelenk-Bolzen 68e ist exzentrisch in der Exzenter-Buchse 68d gelegen, um den genannten Längenveränderungs-Ausgleich bei Variierung der Hinterkanten-Wölbung zu bewirken. Im Unterschied zum Pendel-gelenk nach der Figur 5 ist bei dem Pendel-Gelenk 68 nach der Figur 6 der Gelenk-Bolzen 68e zusätzlich die Gelenk-Achse der beiden an dieser Stelle miteinander verbundenen Wirbel 61, so daß dieser zugleich das Wirbel-Gelenk 69 bildet. Das Wirbel-Gelenk 69 ist also im Pendel-Gelenk 68 gelegen. Der Holm 52 ist in der in der Figur 6 dargestellten Variante auf der Innenseite der ersten Beplankung 55a elastisch mit dieser verbunden. Dies kann beispielsweise mit Verbindungselementen erfolgen. Diese Variante ist für die Ausführung des Antriebsstrangs 62 in Gondelanordnung nach der Figur 12 vorgesehen. Bei der Anordnung des Antriebsstrangs 62 innerhalb der Torsionskästen 53 ist die Befestigung des Holms 52 auf der Seite der Beplankung vorzusehen, auf der sich das Wirbel-Gelenk 69 bzw. das Pendel-Gelenk 68 befindet.

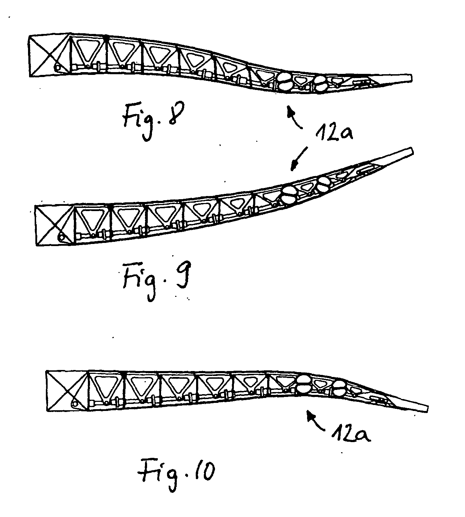

In der Figur 7 ist eine weitere Ausführungsform der Gelenke 68, 69 dargestellt, bei der beide als elastisches Gelenk ausgebildet sind. Das Pendel 68b ist über eine elastische Verbindung an der ersten Beplankung 55a angebracht. Zur Optimierung der Verschwenkbarkeit des Pendels 68b ist dieses quer zu seiner Schwenk-Bewegung zweiteilig mit einem ersten 68g und einem zweiten 68h Pendelteil aufgebaut. Bei einer Schwenkbewegung des Pendels 68b aufgrund einer Relativ-Bewegung zwischen den Wirbeln 61 und den Torsionskästen 53 gleiten diese in deren Längsrichtung aneinander. Zudem schließt sich an jeden Pendelteil 68g, 68h über Anschlußstellen 68i bzw. 68j jeweils ein Wirbel 61 an, so daß jeweils ein Wirbel 61 und ein Pendelteil 68g bzw. 68h zusammen einteilig aus elastischem Material gebildet sind. Bei der einer Relativ-Bewegung zwischen den Wirbeln 61 und den Torsionskästen 53 erfolgt dadurch zum einen eine Biegung in den Anschlußstellen 68i bzw. 68j, eine Gleitbewegung zwischen dem ersten 68g und zweiten 68h Pendelteil sowie eine weitere Biegung zwischen den Pendelteilen und der Befestigung derselben an der ersten Beplankung 55a.

In der in den Figuren 3 bis 11 dargestellten Ausführungsform ist die Antriebsmechanik 60 mit dem Antriebsstrang umfassend zumindest eine Antriebsehne 62a und einen dieser zugeordneten Stellantrieb 70 innerhalb des Segments 12a angeordnet. Jeder Holm 52 weist eine Aussparung 72a auf, durch die der Antriebsstrang 60 hindurchverläuft. Bei einer Anordnung der Wirbel 61 versetzt zu den Torsionskästen erstrecken sich auch Wirbel 61 durch die Aussparung hindurch. Alternativ kann die die Antriebsmechanik 60 auch außerhalb des Segments 12a, beispielsweise in der Gondel-Anordnung nach der Figur 10, angeordnet sein.

Der Antriebsstrang 62 bzw. jede Antriebsehne 62a verläuft in der vertikalen Richtung 12d beabstandet zum jeweiligen Übertragungselement 64. Dabei führt ein Verbindungsstück 65 des Wirbels von dem Übertragungselement 64 zu einer Verbindungs- oder Anschlußstelle 63, an dem ein Gelenk 67 den Wirbel 61 mit einer zugehörigen Antriebsehne 62a verbindet. Das Gelenk 67 kann auch ein elastisches Gelenk sein. Das Übertragungselement 64 verläuft entlang einer oder mehrerer Beplankungsabschnitte 56a der ersten Beplankung 55a, die die obere, d.h. saugseitige oder die untere, d.h. die druckseitige Beplankung sein kann. Das zumindest eine Übertragungselement 64, aber vorzugsweise mehrere Übertragungselemente 64 bestimmt bzw. bestimmen also den Verlauf der Beplankung auf einer Seite eines Torsionskastens 53.

Mittels der Längenveränderung der zumindest einen Antriebsehne 62a aufgrund eines Steuersignals an den entsprechenden Stellantrieb werden zumindest zwei Wirbel 61 relativ zueinander verschwenkt, da die Verbindungsstücke 65 die Verschiebung der Gelenke 67 relativ zueinander hebelartig auf die zugehörigen Übertragungselemente übertragen. Sind mehrere Profilsehnen 62a und dementsprechend mehrere Stellantriebe 62a vorgesehen, wird je nach der zu erreichenden Profilform sämtliche oder nur eine Auswahl der Stellantriebe 70 mit einem dieser Profilform entsprechenden Stellsignal angesteuert. Aufgrund der Hebelwirkung der Verbindungsstücke 65 werden die Übertragungselemente 64 verschwenkt und somit auch der Verlauf der ersten Beplankung 55a, der die Übertragungselemente in der jeweiligen Ausführungsform der Erfindung zugeordnet sind. Durch die Torsionssteifigkeit der Torsionskästen 53 wird somit die Profilform des variablen Flügelbereichs in vorbestimmter Weise verändert.

Die Antriebsehne 62a ist aufgrund entsprechender Steuervorgaben aus einer neutralen Länge verlängerbar oder verkürzbar ausgestaltet. Hierzu ist ein Stellantrieb 70 vorgesehen, der vorzugsweise in eine Antriebsehne 62a mechanisch integriert ist. Als Stellantrieb kommt jeder Stellantrieb nach dem Stand der Technik in Betracht, der die besonderen Anforderungen des Anwendungsfalles erfüllt. Vorzugsweise ist jeder Stellantrieb 70 einzeln ansteuerbar. Durch beispielsweise ein Ein- oder Ausfahren zumindest eines Stellantriebs 70 werden also die mit diesen verbundenen Rippen 61 verdreht oder verschwenkt. Die Antriebselemente oder Stellantriebe 62b können durch Motore nach dem Stand der Technik realisiert sein. Dabei kommt beispielsweise ein Wanderwellen-Motor oder ein Schneckenantrieb in Betracht. Letzterer ist nach dem Stand der Technik gebildet und weist eine durchgehende Antriebswelle und eine Mutter mit einem Antriebsgewinde auf, das mit einem entsprechenden Gewinde der Antriebswelle zusammenwirkt. Elektrorheologische Fixierfilme sind.an.der Antriebswelle angeordnet, die mit entsprechend an der Mutter angeordneten elektrortieologischen Fixierfilmen zusammenwirken. Durch entsprechendes Anlegen von Spannungen an die elektrorheologischen Fixierfilme wird ein Aus- und Einfahren der Antriebswelle bewirkt.

Bei bestimmten Ausgestaltungen des erfindungsgemäßen Flügels oder Flügelbereichs können im Endbereich, beispielsweise im stromabwärts gelegenen Endbereich 51 des variablen Flügelbereichs größere Verschiebungen zwischen der oberen Beplankung 55a und der unteren Beplankung 55b auftreten. Um diese zu führen und gleichzeitig die obere 55a und untere 55b Beplankung in diesem Abschnitt in einem vorbestimmten Abstand zu halten, ist zumindest ein an den gegenüberliegenden Beplankungen 55a, 55b befestigter Abstandhalter 81 und optional eine Führungseinrichtung 78 mit einem Endstück 77 vorgesehen (vgl. Figuren 3 sowie 13 bis 17).

Um sicherzustellen, daß die Beplankungen 55a, 55b in jeder Verstellposition der Torsionkästen 53 an dem Profil-Endstück 77 gehalten werden, kann die Führungseinrichtung 78 vorgesehen sein, deren vorzugsweise Gestaltung in den Figuren 3 sowie 13 und 14 dargestellt ist. Ein mit den Beplankungen verbundenes Zwischenstück 78a ist mit dem Gelenk 67 des hintersten, d.h. am weitesten in der Längsrichtung 12c stromabwärts gelegenen Wirbels 61 gelenkig verbunden. Das Zwischenstück 78a kann mit der ersten Beplankung 55a verbunden sein. Das Zwischenstück 78a bildet mit einem Führungselement 78b, das mit der zweiten Beplankung 55b in Verbindung steht, eine Gleitführung aus.

Eine bevorzugte Ausführungsform der erfindungsgemäßen Gleitführung weist eine im Zwischenstück 78a vorgesehene, in Längsrichtung 12a verlaufende Führungsbahn 78b auf, die als Langloch oder eine Nut ausgeführt sein kann und in der das beispielsweise als Stift ausgeführte Führungselement 78b gleitet. Der Stift selbst ist über eine Manschette an der zweiten, also an der nicht mit den Wirbeln 61 verbundenen Beplankung 55b angeordnet. Durch das Zusammenwirken der Führungsbahn 78b mit dem Führungselement 78b werden die Beplankungen 55a, 55b am Endstück 77 gehalten.

An diesem Zwischenstück 78a kann ein Endstück 77 des variablen Flügelbereichs angebracht sein. Dies kann auch einteilig mit dem Zwischenstück 78a ausgebildet sein. Auf dem Endstück liegen die Beplankungen 55a, 55b an, d.h. diese gleiten an dem Endstück bei Verstellung des variablen Flügelbereichs. Vorzugsweise ist das Endstück 77 in seinem Querschnitt je nach den Erfordernissen an die Profilform, in den Ausführungeformen der Figuren 3 bis 18 trapezförmig, gebildet und ragt je nach der Lage der Beplankungen 55a, 55b mehr oder weniger weit stromabwärts über die Beplankungen 55a, 55b hinaus. Die erste Beplankung 55a liegt also mit einem Endabschnitt auf einer ersten Anlagefläche 77a und die zweite Beplankung mit ihrem Endabschnitt auf einer zweiten Anlagefläche 77b des Endstücks 77 an.

Weiterhin ist zumindest ein Abstandhalter 81 im Bereich hinter dem letzten stromabwärts gelegenen Wirbel 61 mit der Funktion vorgesehen, die beiden gegenüberliegenden Beplankungen 55a, 55b in einem Mindestabstand zueinander zu halten und gleichzeitig in der Funktion einer spielfreien Gelenkverbindung Relativbewegungen derselben zuzulassen. Der Abstandhalter 81 kann auch an anderen Stellen des variablen Flügelbereichs vorgesehen sein und nach verschiedenen Ausführungsformen gestaltet sein, von denen drei in den Figuren 15 bis 17 dargestellt sind. Dei diesen Ausführungsformen weist der Abstandhalter 81 ein Band 73 mit geringer Biegesteifigkeit auf, das vorzugsweise aus Federstahl oder Faserverbundwerkstoff (FVW), gebildet ist und das einen aufgrund einer relativ zueinander eintretenden Verschiebung der Beplankungen 55a, 55b drehbaren Mittelteil 82 mit zwei freien Federarmen 83a, 83b umfaßt.

In der Ausführungsform nach der Figur 15 sind die freien Federarme 83a, 83b gegen die gegenüberliegenden Beplankungen 55a, 55b vorgespannt oder an diesen befestigt, und das Mittelteil 82 durch einen Innenzylinder bzw. Kegelstumpf 82a gestützt. Das Endstück 77, zu dem der Abstandhalter 81 in Spannweiten-Richtung versetzt ist, weist in seinem Inneren eine in der Flügelbereich-Längsrichtung 12c verlaufende Führungsbahn 82b in Form beispielsweise eines Langlochs oder einer Nut auf, die mit einem Führungsstift 82c, der Bestandteil des Abstandhalters 81 ist, zusammenwirkt.

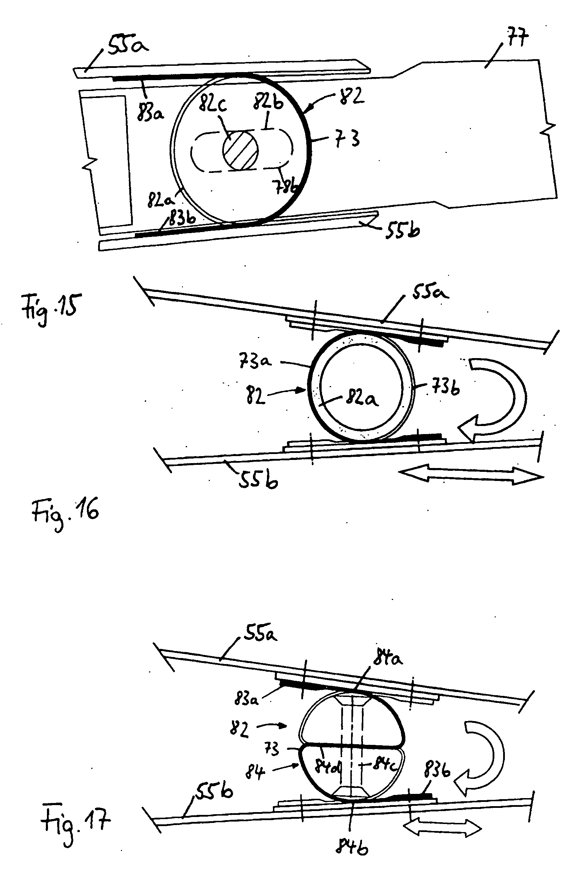

Bei dem Abstandhalter 81 in der Ausführungsform nach der Figur 16 ist das elastische Band an den gegenüberliegenden Beplankungen 55a, 55b befestigt. Die Federarme 83a, 83b sind mittels Verbindungselementen oder Verbindungsverfahren mit der ersten 55a bzw. zweiten 55b Beplankung verbunden. Mehrere Bänder 73 sind mit ihrem Mittelteil um einen Zylinder bzw. Kegelstumpf 82a gelegt. In der Figur 16 ist eine Ausführungsform dargestellt, die ein erstes Band 73a und ein gegensinnig zum ersten Band 73a um das Mittelteil 82 gelegtes zweites Band 73b aufweist. Die Bänder liegen in Spannweiten-Richtung 10 nebeneinander. Das jeweilige Mittelteil 82 ist um den Innenzylinder 82a gelegt und an diesem befestigt. Der Zylinder 82a wirkt sonst nicht über eine Führungsbahn- und Führungsstift-Anordnung mit einem Bestandteil des variablen Flügelbereichs zusammen. Der Zylinder 82a ist aufgrund der Bewegung der freien Federarme 83a, 83b bei einer Relativ-Verschiebung der gegenüberliegenden Beplankungen 55a, 55b drehbar, während der Abstandhalter 81 aufgrund der Befestigung der Federarme 83a, 83b nach wie vor seine Stützfunktion oder Abstandshaltung gegenüber den gegenüberliegenden Beplankungen 55a, 55b aufrechterhält. Bei einer Bewegung der ersten 55a und zweiten 55b Beplankung relativ zueinander erfüllt der Abstandshalter 81 nach der Figur 15 also die Funktion einer spielfreien Gelenkverbindung.

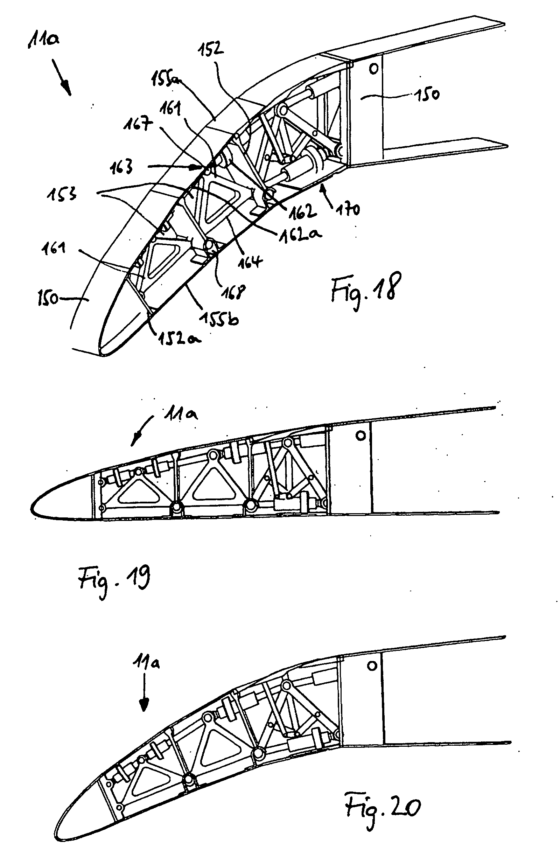

In der Ausführungsform nach der Figur 17 sind die Enden der freien Arme 83a, 83b gegensinnig zueinander gerichtet. Der Mittelteil 82 des Bandes 73 wird gehalten von einem zweiteiligen Zylinder 84 mit einem ersten Teil 84a und einem zweiten Teil 84b. Die beiden Teile erstrecken sich in der Spannweiten-Richtung 10 und weisen jeweils einen halbkreisförmigen Querschnitt auf, wobei deren ebenen Flächen aneinander liegen und mittels eines Stiftes 84c miteinander befestigt sind. Das Band 73 ist S-förmig um die Außenseiten und zwischen die ebenen Flächen der Teile 84a, 84b gelegt, so daß dieses durch die Wirkung des Stiftes 84c festgeklemmt ist. Es können auch mehrere Bänder 73a, 73b gegensinnig und gegenseitig in Spannweiten-Richtung 10 versetzt zueinander vorgesehen sein.

In analoger Weise zu den Hinterkanten-Klappen 12 kann der erfindungsgemäße variable Flügelbereich als Vorderkanten-Klappe 11 ausgeführt werden. Eine Ausführungsform derselben wird im folgenden beschrieben:

Die Figuren 18 bis 20 zeigen eines von mehreren in Spannweiten-Richtung 10 nebeneinander angeordnetes Vorderkanten-Klappensegment oder Klappensegment 11a der Vorderkanten-Klappe 11. Jedes Klappensegment 11a wird in Klappen-Längsrichtung 12c gesehen aus zumindest zwei Torsionskästen 153 gebildet, wobei jeder Torsionskasten 153 in Längsrichtung 12c von jeweils zwei Holmen 152 und alternativ dazu in einem Endbereich des Klappensegments von einem Holm 152 und einem Stützelement 152a eines Endbereichs 150, von einem ersten Beplankungs-Segment 155a und einem zweiten Beplankungs-Segment 155b umgrenzt wird. In analoger Weise zu der an Hand der Ausführungsform nach den Figuren 3 bis 12 sind innerhalb oder außerhalb der Torsionskästen 153 zumindest ein Wirbel 161 angeordnet, der ein Übertragungselement 164 und eine Profilsehens 162a sowie einen Stellantrieb 162b aufweist. Das Übertragungselement 164 verläuft entlang der ersten Beplankung 155a. Die Profilsehne 162 ist am jeweiligen Wirbelelement 161 mittels eines Drehgelenks 167 drehbar gelagert. Die Wirbelelemente 161 sind mittels Pendel-Gelenke 168 in beschriebener Weise an den Holmen 152 bzw. an der ersten Beplankung 155a angelenkt, so daß bei der Verstellung des variablen Flügelbereichs entstehende Relatiwerschiebungen zwischen der Bepülankung 155a und den Wirbeln 161 ausgeglichen werden.

An einem oder an beiden Enden kann die Vorderkanten-Klappe 11 einen Endbereich 51 aufweisen, wie er in der Figur 3 dargestellt ist. Die Relativ-Bewegungen der ersten 155a zur zweiten 155b Beplankung kann jedoch auch durch Überlappungsbereiche 170 aufgefangen werden, die wie aerodynamische Dichtungen funktionieren. Ein solcher Überlappungsbereich 170 kann an der ersten oder an der zweiten oder an beiden Beplankungen vorgesehen sein.

Durch Betätigung der entsprechenden Antriebselemente 154 aufgrund von Stuervorgaben kann die Länge der entsprechenden Profilsehne 162 und damit die Form jedes Torsionskastens 153 in eine vorbestimmte Form gebracht werden.

An der Beplankung der Vorder- und Hinterkanten-Klappen 11 bzw. 12 können Piezoelemente angebracht sein, die die Bewegung der Wirbelelemente 61 bzw. 161 unterstützen.

Die erfindungsgemäßen Vorder- und Hinterkanten-Klappen 11 bzw. 12 sind nicht nur für Flugzeuge vorgesehen, sondern können auch allgemein bei Fahrzeugen, z.B. für Spoiler-Flügel verwendet werden, wenn auch dort andere Größenverhältnisse maßgebend sind. Nach dem beschriebenen Lösungsprinzip können auch die Flügelkästen 3 gestaltet sein, um deren Profil variabel zu machen.

## Patentansprüche

1. Variabler Flügelbereich mit einstellbarer, sich in Spannweiten-Richtung erstreckender Profilform, der eine erste Beplankung (55a; 155a) und eine dieser gegenüberliegende zweite Beplankung (55b; 155b) und die Beplankungen (55a, 55b; 155a, 155b) stützende Holme (52; 152) aufweist, mit in Längsrichtung (12c) gesehen hintereinander angeordneten Torsionskästen (53, 153), die jeweils durch einen Teil der ersten Beplankung (55a; 155a) und einen Teil der zweiten Beplankung (55b; 155b) und zumindest einen Holm (52; 152) gebildet sind, mit einer sich in Längsrichtung (12c) des variablen Flügelbereichs zwischen einem ersten Endbereich (50; 150) und einem zweiten Endbereich (51; 151) erstreckenden Antriebsmechanik (60; 160), die zumindest einen an einem Übertragungselement (64;164) mit einem Bestandteil des Torsionskastens (53; 153) gekoppelten Wirbel (61;161), der an einem Wirbelgelenk (69; 169) mit dem ersten Endbereich (50; 150) oder dem zweiten Endbereich (51; 151) oder einem weiteren Wirbel (61; 161) verbunden ist, und einen zumindest eine aufgrund eines Steuerkommandos in ihrer Länge veränderliche, an einer in Vertikalrichtung (12d) von dem Übertragungselement (64; 164) beabstandeten Verbindungsstelle (63; 163) mit dem Wirbel (61; 161) gekoppelte Antriebssehne (62a; 162a) enthaltenden Antriebsstrang (62; 162) umfaßt, wobei das Übertragungselement (64; 164) des zumindest einen Wirbels (61; 161) über ein zum Ausgleichen einer Relativbewegung zwischen der ersten Beplankung (55a;155a) und dem zumindest einem Wirbel (61; 161) dienendes Pendelgelenk (68;168) mit dem Bestandteil des Torsionskastens (53; 153) oder direkt mit der ersten Beplankung (55a; 155a) in Verbindung steht.

2. Variabler Flügelbereich nach dem Anspruch 1, **dadurch gekennzeichnet, daß** mehrere in der Längsrichtung (12c) hintereinander angeordnete Wirbel 61, 161 vorgesehen sind, die mit jeweils einer Antriebsehne (62a, 162a) in Verbindung stehen.

3. Variabler Flügelbereich nach dem Anspruch 1 oder 2, **dadurch gekennzeichnet, daß** die Anordnung aus dem zumindest einen Wirbel (61, 161) und der zumindest einen Antriebsehne (62a, 162a) innerhalb der Torsionkästen angeordnet ist.

4. Variabler Flügelbereich nach dem Anspruch 1 oder 2, **dadurch gekennzeichnet, daß** die Anordnung aus dem zumindest einen Wirbel (61, 161) und der zumindest einen Antriebsehne (62a, 162a) außerhalb der Torsionkästen angeordnet ist.

5. Variabler Flügelbereich nach einem der voranstehenden Ansprüche, **dadurch gekennzeichnet, daß** das Pendel-Gelenk (68, 168) als elastisches Gelenk ausgeführt ist, bei dem jedes Übertragungselement (64, 164) über elastische Verbindungen einerseits mit der oberen Beplankung (55a, 155a) und mit einem Holm (52, 152) verbunden ist.

6. Variabler Flügelbereich nach einem der Ansprüche 1 bis 4, **dadurch gekennzeichnet, daß** das Pendel-Gelenk (68, 168) als Exzenter-Gelenk ausgeführt ist, bei dem jeder Wirbel (612, 161) exzentrisch in einer Exzenterbuchse (68d) gelagert ist.

7. Variabler Flügelbereich nach einem der Ansprüche 1 bis 4, **dadurch gekennzeichnet, daß** das Pendel-Gelenk (68, 168) einen Pendel (68b) aufweist, der jeden Wirbel (61, 161) mit einem Holm (52, 152) oder der ersten Beplankung (55a, 155a) verbindet.

8. Variabler Flügelbereich nach einem der voranstehenden Ansprüche, **dadurch gekennzeichnet, daß** dieser als Hinterkanten-Klappe eines Tragflügels verwendet wird.

9. Variabler Flügelbereich nach einem der Ansprüche 1 bis 7, **dadurch gekennzeichnet, daß** dieser als Vorderkanten-Klappe eines Tragflügels verwendet wird.

## Claims

1. A variable wing region having an adjustable profiled form which extends in the wing-span direction and has a first planking (55a; 155a) and a second planking (55b; 155b) opposite the first planking and spars (52; 152) supporting the plankings (55a, 55b; 155a, 155b), having torsion boxes (53; 153) arranged one after another as seen in the longitudinal direction (12c), which are each formed by part of the first planking (55a; 155a) and part of the second planking (55b; 155b) and at least one spar (52; 152), having an operating mechanism (60; 160) which extends between a first end region (50; 150) and a second end region (51; 151) in the longitudinal direction (12c) of the variable wing region and comprises at least one vortex element (61; 161) which is coupled to a component of the torsion box (53; 153) by a transmission element (64; 164) and is connected to the first end region (50; 150) or the second end region (51; 151) or a further vortex element (61; 161) by a vortex-element joint (69; 169), and comprising a drive train (62; 162) which contains at least one drive chord (62a; 162a) which may be altered in terms of its length as a result of a control command and is coupled to the vortex element (61, 161) at a connecting point (63; 163) which is spaced from the transmission element (64; 164) in the vertical direction, the transmission element (64; 164) of the at least one vortex element (61, 161) being connected to the component of the torsion box (53; 153) by way of a pendulum joint (68; 168), which serves to compensate a relative movement between the first planking (55a; 155a) and the at least one vortex element (61; 161), or being connected directly to the first planking (55a; 155a).

2. A variable wing region according to Claim 1, **characterised in that** a plurality of vortex elements (61, 161) are provided, which are arranged one after another in the longitudinal direction (12c) and are each connected to a drive chord (62a, 162a).

3. A variable wing region according to Claim 1 or 2, **characterised in that** the arrangement comprising the at least one vortex element (61, 161) and the at least one drive chord (62a, 162a) is arranged inside the torsion boxes.

4. A variable wing region according to Claim 1 or 2, **characterised in that** the arrangement comprising the at least one vortex element (61, 161) and the at least one drive chord (62a, 162a) is arranged outside the torsion boxes.

5. A variable wing region according to one of the preceding claims, **characterised in that** the pendulum joint (68, 168) is constructed as a resilient joint in which resilient connections connect each transmission element (64, 164) to the upper planking (55a, 155a) on the one hand and to a spar (52, 152).

6. A variable wing region according to one of Claims 1 to 4, **characterised in that** the pendulum joint (68, 168) is constructed as an eccentric joint in which each vortex element (61, 161) is eccentrically mounted in an eccentric bush (68d).

7. A variable wing region according to one of Claims 1 to 4, **characterised in that** the pendulum joint (68, 168) has a pendulum element (68b) which connects each vortex element (61, 161) to a spar (52, 152) or to the first planking (55a, 155a).

8. A variable wing region according to one of the preceding claims, **characterised in that** it is used as a trailing edge flap of a wing.

9. A variable wing region according to one of Claims 1 to 7, **characterised in that** it is used as a leading edge flap of a wing.

## Revendications

1. Partie d'aile à géométrie variable à profil réglable dans la direction longitudinale, qui comprend une première paroi (55a ; 155a) et une deuxième paroi (55b ; 155b) disposée en vis à vis de la première, ainsi que des poutres (52, 152) qui soutiennent les parois (55a, 55b ; 155a, 155b), avec des caissons de torsion (53, 153) qui sont disposés l'un à la suite de l'autre dans la direction longitudinale (12c), sont formés chacun d'une portion de la première paroi (55a ; 155a), d'une portion de la deuxième paroi (55b ; 155b) et d'au moins une poutre (52 ; 152), avec un mécanisme d'entraînement (60, 160), qui s'étend dans la direction longitudinale (12c) de la partie d'aile à géométrie variable, entre une première zone d'extrémité d'aile (50, 150) et une deuxième zone d'extrémité d'aile (51, 151) et comprend au moins un élément d'ossature (61, 162) qui est couplé à une partie du caisson de torsion (53, 153) par l'intermédiaire d'un élément de transmission (64, 164) et est lié au niveau d'une charnière d'élément d'ossature (69, 169) à la première zone d'extrémité d'aile (50, 150) ou à la zone d'extrémité d'aile (51, 151) ou à un autre élément d'ossature (61, 161), ainsi qu'au moins une chaîne de transmission (62, 162) avec un câble de transmission (62a, 162a) dont la longueur peut être modifiée par un ordre de commande et qui est lié à l'élément d'ossature (61, 161) en un point (63, 163) distant dans la direction verticale (12d) de l'élément de transmission (64, 164), l'élément de transmission (64, 164) de l'élément d'ossature (61, 161) au nombre d'au moins un étant lié à la partie de caisson de torsion (53, 153) par l'intermédiaire d'une articulation pendulaire (68, 168) destinée à compenser un déplacement relatif entre la première paroi (55a ; 155a) et l'élément d'ossature (61, 161) au nombre d'au moins un, ou de manière directe à la première paroi (55a, 155a).

2. Partie d'aile à géométrie variable selon la revendication 1, **caractérisée par le fait qu'**il est prévu plusieurs éléments d'ossature (61 ; 161) disposés l'un à la suite de l'autre dans la direction longitudinale (12c) qui sont liés chacun à un câble d'entraînement (62a ; 162a).

3. Partie d'aile à géométrie variable selon la revendication 1 ou 2, **caractérisée par le fait que** l'agencement d'au moins un élément d'ossature (61 ; 161) et du câble d'entraînement (62a ; 162a) au nombre d'au moins un est disposé à l'intérieur des caissons de torsion.

4. Partie d'aile à géométrie variable selon la revendication 1 ou 2, **caractérisée par le fait que** l'agencement d'au moins un élément d'ossature (61 ; 161) et du câble d'entraînement (62a ; 162a) au nombre d'au moins un est disposé à l'extérieur des caissons de torsion.

5. Partie d'aile à géométrie variable selon une des revendications précédentes, **caractérisée par le fait que** l'articulation pendulaire (68 ; 168) est conformée en articulation élastique, dans laquelle chaque élément de transmission (64 ; 164) est lié par l'intermédiaire de liaisons élastiques d'une part à la portion de paroi supérieure (55a ; 155a) d'une part et à une poutre (52 ; 152) d'autre part.

6. Partie d'aile à géométrie variable selon une des revendications 1 à 4, **caractérisée par le fait que** l'articulation pendulaire (68 ; 168) est conformée en articulation à excentrique, dans laquelle chaque élément d'ossature (61 ; 161) est monté excentré dans une douille excentrique (68d).

7. Partie d'aile à géométrie variable selon une des revendications 1 à 4, **caractérisée par le fait que** l'articulation pendulaire (68 ; 168) comprend un balancier (68b) qui relie chaque élément d'ossature (61 ; 161) à une poutre (52 ; 152) ou à la première portion de paroi (55a ; 155a).

8. Partie d'aile à géométrie variable selon une des revendications précédentes, **caractérisée par le fait qu'**elle est utilisée en tant que volet de bord arrière d'une aile d'avion.

9. Partie d'aile à géométrie variable selon une des revendications 1 à 7, **caractérisée par le fait qu'**elle est utilisée en tant que volet de bord avant d'une aile d'avion.
